# EUROPEAN PATENT SPECIFICATION

(11) **EP 0 572 051 B1**
(45) Date of publication and mention of the grant of the patent: **14.05.1997**
(21) Application number: 93200842.8
(22) Date of filing: 24.03.1993
(51) Int. Cl.: A21D 2/16

(54) **Liquid bread improvers**
Flüssige Brotverbesserungsmittel
Améliorants liquides pour le pain

(30) Priority: 29.04.1992 EP 92201189
(43) Date of publication of application: 01.12.1993
(73) Proprietor: UNILEVER N.V., 3013 AL Rotterdam (NL); UNILEVER PLC, London EC4P 4BQ (GB)
(72) Inventor: Cabrera, Jorge Arturo, Unilever Research, NL-3133 AT Vlaardingen (NL); Heeren, Caesar William, Unilever Research, NL-3133 AT Vlaardingen (NL)
(74) Representative: Rots, Maria Johanna Francisca

(56) References cited:
- EP-A- 0 246 554
- GB-A- 1 544 499
- US-A- 3 360 376
- US-A- 3 943 259
- PATENT ABSTRACTS OF JAPAN vol. 7, no. 46 (C-153)(1191) 23 February 1983
- DATABASE WPI Section Ch, Week 7849, Derwent Publications Ltd., London, GB; Class D13, AN 78-88476A
- DATABASE WPI Section Ch, Week 7923, Derwent Publications Ltd., London, GB; Class D11, AN 79-43119B
- CEREAL CHEMISTRY vol. 58, no. 3, June 1981, MINNEAPOLIS US pages 171 - 174 W.H. KNIGHTLY 'Shortening systems: fats, oils and surface-active agents - present and future.'

## Description

Given the ease in handling, pumping and metering, liquid bread-improving compositions were developed in the past. A prerequisite of such liquid bread improvers is that they should be fluid at temperatures of about 10-30°C and that they should be stable on storage at these temperatures and do not separate into two distinct phases, including a precipitate.

According to US 3,943,259 fluid shortenings comprising 4-14 wt.% of soft mono- and diglycerides, 2-8 wt.% of ester emulsifiers, 0-8 wt.% of a solid stearin fraction and at least 40 wt.% of a liquid vegetable oil, fulfil the requirements mentioned above.

Although these known compositions have good storage properties, and do impart reasonable properties such as texture, specific volume or anti-staling to a dough or a baked product made from the dough, this product has the disadvantage that it becomes a paste after some period of storage at room temperature. Further at higher temperatures this products shows oil-exudation (about 10-15 wt%). We found that above dough properties could be improved by the incorporation of bread improving enzymes into the compositions of this US patent. However, this incorporation of enzymes affected the storage properties of the composition according to US 3,943,259 adversely.

We have studied how to overcome the storage stability problem and the problems of the incorporation of the enzymes. As a result we have found novel liquid bread-improving compositions containing bread-improving enzymes while the compositions remain stable for at least four months.

The liquid bread-improving compositions according to the invention comprise :
75-95 wt.% of a vegetable oil having an N₂₀ < 2.0 (N₂₀ being the solid fat content measured by NMR pulse after stabilization);
1-5 wt.% of a hydrogenated vegetable oil having a melting point between 60 and 70°C;
1-5 wt.% of a partly hydrogenated vegetable oil having a melting point between 35-45°C;
2-20 wt%, preferably 2-10 wt.% of emulsifiers, at least including diacetyl tartaric esters from saturated or unsaturated mono- and/or diglycerides (i.e. DATA esters), and optionally in combination with saturated and/or unsaturated mono- and diglycerides (i.e. Hymono's); and/or calcium stearyl lactylate (i.e. CSL) and/or sodium stearyl lactylate (i.e. SSL);
0-0.2 wt.% of flavours;
0.1-0.5 wt.% of bread-improving enzymes;
0.1-1.0 wt%, preferably 0.1-0.5 wt.% of oxidants, the crystal size of the crystallized fat present in the composition being less than 25 µm, preferably less than 10 µm and the average particle size of the particles present in the composition being less than 50 µm.

The liquid vegetable oil having N₂₀ < 2.0 may be chosen from any liquid vegetable oil meeting the N-requirement. Examples thereof are soybean oil, sunflower oil, safflower oil and maize oil. The use of soybean oil is preferred.

The hydrogenated vegetable oil having a melting point of 60-70°C may be any hydrogenated vegetable oil meeting the melting point requirement. Examples thereof are hydrogenated soybean oil, in particular BO-65, hydrogenated rapeseed oil, hydrogenated sunflower oil or hydrogenated safflower oil. Preferred is the hydrogenated soybean oil.

The partly hydrogenated vegetable oil of melting point 35-45°C may also be any hydrogenated vegetable oil meeting the melting point requirement. Examples thereof are partly hydrogenated soybean oil, in particular Moldo oils, i.e. partly hydrogenated soybean oil of melting point 38-42°C, partly hydrogenated rapeseed oil, partly hydrogenated sunflower oil, partly hydrogenated safflower oil or partly hydrogenated maize oil. It is emphasized here (and illustrated by the Examples) that the presence of this partly hydrogenated compound is essential for obtaining the desired stability of the end product.

Another important feature is that DATA esters (diacetyl tartaric esters from mono- and/or diglycerides) are present in the emulsifier composition. In addition to the DATA esters, other emulsifiers, such as mono- and/or diglycerides (i.e. Hymono's), stearyl lactylates (both Ca- and Na-, thus CSL or SSL, respectively) can be present. We found that in particular a mixture of DATA esters and Hymono's in a weight ratio of 2-6 DATA : 1-4 Hymono's gave excellent results.

The bread-improving enzyme may be any known enzyme having bread-improving properties. Examples thereof are amylase, xylanase, glucose oxidase, mannase, maltase or mixtures thereof.

The oxidant may be any known oxidant used in bread doughs, e.g. ascorbic acid or KBrO₃. A preference is expressed for the addition of ascorbic acid to the composition.

The conditions which have to be used during the preparation of our liquid bread improvers should be such that the crystal size of the crystallized fat in our compositions is less than 25 µm, preferably less than 10 µm, preferably less than 8 µm. These conditions can be fulfilled by a proper selection of process conditions, as will be pointed out hereinafter. Preferably, the amount of crystallized fat present in the composition should be 2-10 wt.% (calculated on the total composition).

The most preferred composition comprises :
80-90 wt.% of soybean oil;
2-4 wt.% of hardened soybean oil of melting point 65°C;
2-4 wt.% of partly hardened soybean oil of melting point 40°C;
6-8 wt.% of emulsifiers consisting of 60-80 wt.% of DATA esters and 40-20 wt.% of Hymono's;
0.1-0.25 wt.% of enzymes;
0.1-0.25 wt.% of ascorbic acid, the crystal size of the crystallized fat being 6-8 µm and the average particle size of the particles present being 30-40 µm.

As a matter of fact, the average particle size of the particles present is mainly determined by the particle size of the crystallized fat and the particle size of the enzymes.

Liquid bread improvers having the required properties are obtained by a process consisting of the following process steps :
(1) the fat components are mixed and melted at temperatures between 50 and 75°C;
(2) the molten fat mixture is kneaded and worked through a Votator usually consisting of an A- and a C-unit (but A-C-B- is also possible), while the mixture is cooled to 20-32°C;
(3) the cooled mixture from (2) is fluidized with mild stirring for at least 1 hour, preferably at least 10 hours at a temperature of 25-35°C;
(4) the enzyme(s) and the oxidant(s) are added to the mixture resulting from (3);
(5) the mixture from (4) is stirred for 30 minutes - 4 hours at ambient temperature.

In this process, steps (2) and (3) are essential for obtaining the desired crystal size of the fat crystals and the desired amount of fat crystals in the composition. In particular, the temperature and residence time are important.

The enzymes can only be added at low temperatures. Therefore, the enzymes are added in step (4). The stirring in step (5) is required for obtaining the desired average size for the particles present in the composition.

We found that the storage stability of our novel compositions was at least 4 months while the storage stability of similar compositions, but without the partly hydrogenated fat component, was less than 2 months.

### EXAMPLES AND COMPARATIVE EXAMPLES

1. The fat components mentioned in Table I were mixed and melted at 70°C;
2. The mixture was passed through a Votator (A-C) and cooled to 25°C;
3. The cooled mixture was fluidized in a stirrer tank at 30°C, during which fluidization it was slowly stirred for 16 hours;
4. The enzymes and ascorbic acid were added to the mixture;
5. The mixture was stirred for 2 hours at ambient temperature.

The storage stability of the end products was observed. Table I indicates the times when a precipitate could be observed.

**TABLE I**

| Component | Example 1 | Example 2 |
|---|---|---|
| % soybean oil (N₂₀=0) | 86.7 wt% | 86.7 wt% |
| % h. Bo-65 | 2.5 | 5.0 |
| % Moldo BO-40 | 2.5 | - |
| % emulsifier, comprising DATA-esters and monoglyceride | 8.0 | 8.0 |
| % bread improving enzymes | 0.15 | 0.15 |
| ascorbic acid | 0.15 | 0.15 |
| storage stability | 4 months | 2 months |

## Claims

1. Liquid bread-improving composition comprising :
75-95 wt.% of a vegetable oil having an N₂₀ < 2.0;
1-5 wt.% of a hydrogenated vegetable oil having a melting point between 60 and 70°C;
1-5 wt.% of a partly hydrogenated vegetable oil having a melting point between 35-45°C;
2-20 wt%, preferably 2-10 wt.% of emulsifiers, at least including diacetyl tartaric esters from saturated or unsaturated mono- and/or diglycerides; and optionally in combination with saturated and/or unsaturated mono- and/or diglycerides and/or calcium stearyl lactylate and/or sodium stearyl lactylate;
0-0.2 wt.% of flavours;
0.1-0.5 wt.% of bread-improving enzymes;
0.1-1.0 wt%, preferably 0.1-0.5 wt.% of oxidants, the crystal size of the crystallized fat present in the composition being less than 25 µm, preferably less than 10 µm and the average particle size of the particles present in the composition being less than 50 µm.

2. Liquid bread improver according to Claim 1, wherein the vegetable oil having N₂₀ < 2.0 is soybean oil.

3. Liquid bread improver according to Claim 1, wherein the hydrogenated vegetable oil is fully hydrogenated soybean oil.

4. Liquid bread improver according to Claim 1, wherein the partly hydrogenated vegetable oil is a partly hydrogenated soybean oil of melting point 38-42°C.

5. Liquid bread improver according to Claim 1, wherein the emulsifier comprises a blend of diacetyltartaric esters from mono- and/or diglycerides and monoglycerides with a ratio of 2-6 diacetyltartaric esters from mono- and/or diglycerides : 1-4 monoglyceride.

6. Liquid bread improver according to Claim 1, wherein the bread-improving enzyme is chosen from the group consisting of amylase, xylanase, glucose oxidase, mannase, maltase or mixtures thereof.

7. Liquid bread improver according to Claim 1, wherein the oxidant is ascorbic acid.

8. Liquid bread improver according to Claims 1-7, wherein the amount of crystallized fat having a crystal size of less than 25 µm present in the composition is 2-10 wt.%.

9. A process for the preparation of a liquid bread-improving composition having the composition of Claim 1, consisting of the following process steps :
(1) Melting and mixing of the fat components at T = 50-75°C;
(2) Kneading and working the fat mixture through a Votator while cooling the mixture to a temperature of 20-32°C;
(3) Fluidizing the liquid dispersion of fat crystals resulting from (2) with mild stirring for at least 1 hour, preferably at least 10 hours at a temperature of 25-35°C;
(4) Adding the enzymes and oxidants to the mixture resulting from (3);
(5) Stirring the mixture resulting from (4) for 30 minutes - 4 hours at ambient temperature.

## Patentansprüche

1. Flüssige brotverbessernde Zusammensetzung, die umfaßt:
75 bis 95 Gew.-% eines pflanzlichen Öls mit einem N₂₀< 2,0;
1 bis 5 Gew.-% eines hydrierten pflanzlichen Öls mit einem Schmelzpunkt zwischen 60 und 70°C;
1 bis 5 Gew.-% eines teilweise hydrierten pflanzlichen Öls mit einem Schmelzpunkt zwischen 35 bis 45°C;
2 bis 20 Gew.-%, vorzugsweise 2 bis 10 Gew.-%, Emulgatoren, die mindestens Diacetylweinsäureester gesättigter oder ungesättigter Mono- und/oder Diglyceride, fakultativ in Kombination mit gesättigten und/oder ungesättigten Mono- und/oder Diglyceriden und/oder Calciumstearyllactylat und/oder Natriumstearyllactylat, enthalten;
0 bis 0,2 Gew.-% Aromen;
0,1 bis 0,5 Gew.-% brotverbessernde Enzyme;
0,1 bis 1,0 Gew.-%, vorzugsweise 0,1 bis 0,5 Gew.-%, Oxidantien, wobei die Kristallgröße des in der Zusammensetzung vorliegenden kristallisierten Fettes weniger als 25 µm, vorzugsweise weniger als 10 µm, und die durchschnittliche Teilchengröße der in der Zusammensetzung vorliegenden Teilchen weniger als 50 µm ist.

2. Flüssiges Brotverbesserungsmittel gemäß Anspruch 1, wobei das pflanzliche Öl mit einem N₂₀ < 2,0 Sojabohnenöl ist.

3. Flüssiges Brotverbesserungsmittel gemäß Anspruch 1, wobei das hydrierte pflanzliche Öl vollständig hydriertes Sojabohnenöl ist.

4. Flüssiges Brotverbesserungsmittel gemäß Anspruch 1, wobei das teilweise hydrierte pflanzliche Öl ein teilweise hydriertes Sojabohnenöl mit einem Schmelzpunkt von 38 bis 42°C ist.

5. Flüssiges Brotverbesserungsmittel gemäß Anspruch 1, wobei der Emulgator eine Mischung von Diacetylweinsäureestern von Mono- und/oder Diglyceriden und Monoglyceride mit einem Verhältnis von 2 - 6 Diacetylweinsäureester von Mono- und/oder Diglyceriden : 1 - 4 Monoglycerid umfaßt.

6. Flüssiges Brotverbesserungsmittel gemäß Anspruch 1, wobei das brotverbessernde Enzym aus der aus Amylase, Xylanase, Glucoseoxidase, Mannase, Maltase oder Mischungen hiervon bestehenden Gruppe ausgewählt ist.

7. Flüssiges Brotverbesserungsmittel gemäß Anspruch 1, wobei das Oxidans Ascorbinsäure ist.

8. Flüssiges Brotverbesserungsmittel gemäß einem der Ansprüche 1 bis 7, wobei die Menge an in der Zusammensetzung vorliegendem kristallisierten Fett mit einer Kristallgröße von weniger als 25 µm 2 bis 10 Gew.-% beträgt.

9. Verfahren zur Herstellung einer flüssigen brotverbessernden Zusammensetzung mit der Zusammensetzung gemäß Anspruch 1, das aus den folgenden Verfahrensschritten besteht:
(1) Schmelzen und Mischen der Fettkomponenten bei T = 50 bis 75°C;
(2) Durchkneten und Bearbeiten der Fettmischung durch einen Votator, wobei die Mischung auf eine Temperatur von 20 bis 32°C abgekühlt wird;
(3) Verflüssigen der flüssigen Dispersion der von (2) resultierenden Fettkristalle unter mildem, mindestens einstündigem, vorzugsweise mindestens 10-stündigem Rühren bei einer Temperatur von 25 bis 35°C;
(4) Zusatz der Enzyme und Oxidantien zu der aus (3) resultierenden Mischung;
(5) 30-minütiges bis 4-stündiges Rühren der aus (4) resultierenden Mischung bei Raumtemperatur.

## Revendications

1. Composition liquide améliorant le pain, comportant:
de 75 à 95% en poids d'une huile végétale ayant un n₂₀ < à 2,0;
de 1 à 5% en poids d'une huile végétale hydrogénée ayant un point de fusion entre 60 et 70°C;
de 1 à 5% en poids d'une huile végétale partiellement hydrogénée, ayant un point de fusion entre 35 et 45°C;
de 2 à 20% en poids, de préférence de 2 à 10% en poids d'agents émulsifiants, comportant au moins des esters diacétyl-tartriques, provenant de mono- et/ou de diglycérides, saturés ou non saturés: et, facultativement, en combinaison avec des mono- et/ou des diglycérides saturés et/ou non saturés, et/ou du lactylate de stéaryl-calcium et/ou du lactylate de stéaryl-sodium;
de 0 à 0,2% en poids d'agents de sapidité;
de 0,1 à 0,5% en poids d'enzymes améliorant le pain;
de 0,1 à 1,0% en poids, de préférence, de 0,1 à 0,5% en poids d'agents oxydants, la dimension du cristal du corps gras cristallisé présent dans la composition étant inférieure à 25 µm, de préférence inférieure à 10 µm, tandis que la dimension particulaire moyenne des particules présentes dans la composition est inférieure à 50 µm.

2. Agent liquide améliorant le pain selon la revendication 1, dans lequel l'huile végétale présentant un n₂₀ < à 2,0 est de l'huile de soja.

3. Agent liquide améliorant le pain selon la revendication 1, dans lequel l'huile végétale hydrogénée est une huile de soja totalement hydrogénée.

4. Agent liquide améliorant le pain selon la revendication 1, dans lequel l'huile végétale partiellement hydrogénée est une huile de soja partiellement hydrogénée présentant une point de fusion de 38 à 42°C.

5. Agent liquide améliorant le pain selon la revendication 1, dans lequel l'agent émulsifiant comporte un mélange d'esters diacétyl-tartriques provenant de mono- et/ou diglycérides et de monoglycérides présentant un rapport d'esters diacétyl-tartriques 2-6 à partir de mono- et/ou de diglycérides: monoglycéride 1-4.

6. Agent liquide améliorant le pain selon la revendication 1, dans lequel l'enzyme améliorant le pain est choisi dans le groupe constitué de l'amylase, de la xylanase, de la glucose oxydase, de la mannase, de la maltase ou des mélanges de celles-ci.

7. Agent liquide améliorant le pain selon la revendication 1, dans lequel l'agent oxydant est l'acide ascorbique.

8. Agent liquide améliorant le pain selon les revendications 1 à 7, dans lequel la quantité de corps gras cristallisés ayant une dimension des cristaux inférieure à 25 µm, présente dans la composition, est de 2 à 10% en poids.

9. Un procédé pour la préparation d'une composition liquide améliorant le pain, ayant la composition de la revendication 1, comportant les étapes suivantes de traitement:
(1) La fonte et le mélange des corps gras à une température de 50 à 75°C;
(2) Le malaxage et le traitement du mélange de corps gras à travers un échangeur de chaleur à lames tout en refroidissant le mélange à une température de 20 à 32°C.
(3) La fluidisation de la dispersion liquide de cristaux de corps gras obtenus en (2) s ous agitation douce pendant au moins une heure, de préférence au moins 10 heures à une température de 25 à 35°C;
(4) L'addition des enzymes et des agents oxydants au mélange obtenu en (3);
(5) L'agitation du mélange obtenu en (4) pendant de 30 minutes à 4 heures à la température ambiante.
